# EUROPÄISCHE PATENTSCHRIFT

(11) **EP 1 102 922 B1**
(45) Veröffentlichungstag und Bekanntmachung des Hinweises auf die Patenterteilung: **19.03.2003**
(21) Anmeldenummer: 99936519.0
(22) Anmeldetag: 13.07.1999
(51) Int. Cl.: F01N 11/00, F01N 3/20

(54) **REGELUNG EINES NOx-SPEICHER-KATALYSATORS**
REGULATION OF A NOx ABSORPTION CATALYTIC CONVERTER
REGULATION D'UN CATALYSEUR ACCUMULATEUR DE NOx

(30) Priorität: 05.08.1998 DE 19835381; 04.11.1998 DE 19850786
(43) Veröffentlichungstag der Anmeldung: 30.05.2001
(60) Teilanmeldung: 02000690.4
(73) Patentinhaber: Volkswagen Aktiengesellschaft, 38436 Wolfsburg (DE)
(72) Erfinder: HAHN, Hermann, D-30175 Hannover (DE)
(74) Vertreter: Meyer, Enno, Dr.
(86) Internationale Anmeldenummer: EP9904907
(87) Internationale Veröffentlichungsnummer: WO00008316

(56) Entgegenhaltungen:
- EP-A- 0 636 770
- EP-A- 0 831 226
- EP-A- 0 872 633
- EP-A- 0 899 430
- FR-A- 2 746 142
- GB-A- 2 307 311
- US-A- 5 201 173
- US-A- 5 501 074
- US-A- 5 577 383
- US-A- 5 595 060
- US-A- 5 743 084

## Beschreibung

Das Verfahren betrifft die Regelung eines NOx-Absorber-Katalysators einer zeitweise mager laufenden Brennkraftmaschine mit einer in Abgasströmungsrichtung hinter dem Katalysator angeordneten NOx-empfindlichen Meßeinrichtung und einer Steuereinheit.

Bei zeitweise mager laufenden Motoren befindet sich im Abgastrakt dieses Motors üblicherweise ein NOx-Speicherkatalysator. Hinter diesem NOx-Speicherkatalysator ist eine Meßeinrichtung angeordnet, die in der Lage ist, die NOx-Konzentration im Abgas zu messen, beispielsweise ein NOx-Sensor, wie dies in Bild 1 dargestellt ist. Das System verfügt weiter über eine Motorsteuerungseinheit, die das gemessene NOx-Signal verarbeiten und den Betriebszustand des Motors steuern kann. In dieser Motorsteuerungseinheit ist ferner der aktuelle Abgasvolumenstrom zur Berechung des NOx-Massenstromes, die Temperatur des NOx-Speicherkatalysators (durch Rechenmodetle oder Meßeinrichtungen), Modelle oder Meßeinrichtungen zur Bestimmung der vom Motor abgegebenen NOx-Rohemissionen, Modelle oder Meßeinrichtungen zur Bestimmung der im NOx-Speicherkatalysator im Magerbetrieb gespeicherten bzw. im Regenerierbetrieb abgegebenen NOx-Massen sowie Kontrollfunktionen, die für eine dem Beladungszustand des NOx-Speicherkatalysators entsprechende Regenerationszeit und -verfahrensweise bestimmen, bekannt oder vorhanden .

Bislang konnte in dem dargestellten System die im NOx-Speicherkatalysator gespeicherte NOx-Masse nur über Modelle berechnet werden. Über eine dem NOx-Speicherkatalysator nachgeschaltete Lambda-Sonde ist es weiter möglich gewesen, die Dauer der Regenerationszeit zu ermitteln und daraus Rückschlüsse auf die eingespeicherte NOx-Masse zu ziehen. Insbesondere konnte bislang aber nicht ermittelt werden, wieviel NOx unkonvertiert den NOx-Speicherkatalysator passiert.

GB-A-23077311 offenbart ein Verfahren gemäß dem Oberbegriff von Anspruch 1.

Der Erfindung liegt daher die Aufgabe zugrunde, ein Verfahren zur Steuerung eines NOx-Absorber-Katalysators zu entwickeln, das einen optimaleren Betrieb des Katalysators ermöglicht.

Die Aufgabe wird durch die Merkmale der Ansprüche 1 gelöst. Bevorzugte Ausgestaltungen der Erfindung sind Gegenstand der Unteransprüche.

Bevorzugte Ausführungsformen der Erfindung werden nachfolgend anhand der Zeichnungen näher erläutert.
- Fig. 1: zeigt die Anordnung eines NOx-Absorber-Katalysators einer Brennkraftmaschine mit NOx-Sensor,
- Fig. 2: zeigt ein Flußdiagramm des erfindungsgemäßen Verfahrens, dargestellt anhand einer Funktion REGNOSK,
- Fig. 3: zeigt ein Flußdiagramm einer Erweiterung des Verfahrens der Fig. 2, und
- Fig. 4: zeigt ein Flußdiagramm des für die Freigabe des Magerbetriebs in Abhängigkeit von der Katalysatortemperatur verantwortlichen Verfahrens, dargestellt anhand einer Funktion BKSK.

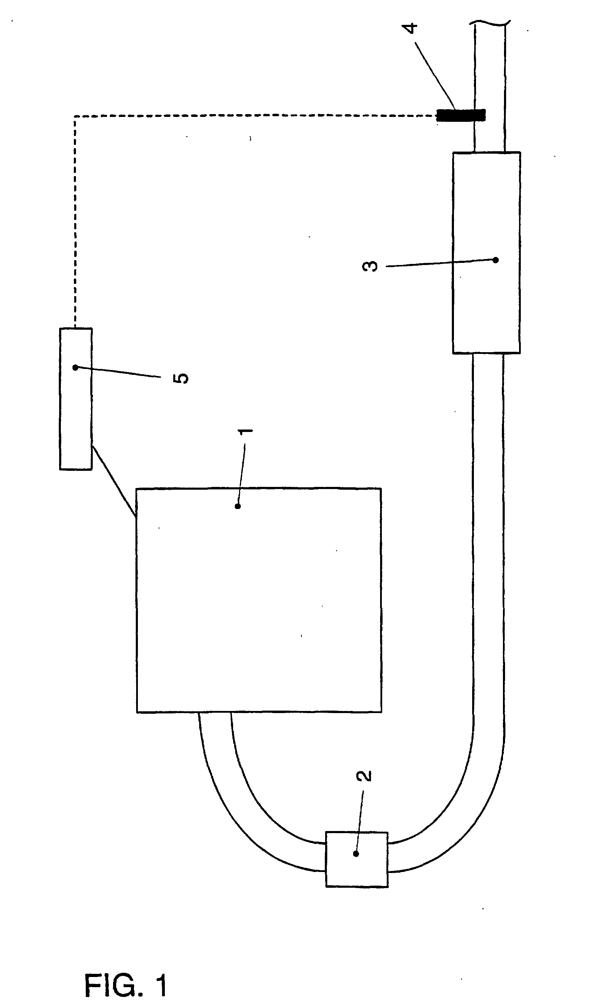

Fig. 1 zeigt eine zeitweise mager betreibbare Brennkraftmaschine 1, die einen optionalen Vorkatalysator 2, einen NOx-Absorber-Katalysator 3, einen NOx-Sensor 4 und/oder eine λ-Sonde 4 sowie ein Steuergerät 5, das für das Motormanagement zuständig ist, aufweist.

Das Steuergerät 5 verarbeitet das gemessene NOx-Signal und steuert den Betriebszustand des Motors 1. Hieraus ist dem Steuergerät 5 (z. B. über hinterlegte Kennfelder) ferner der aktuelle Abgasvolumenstrom und hieraus der NOx-Massenstrom nach dem Speicherkatalysator 3, die Temperatur des NOx-Speicherkatalystors 3 und der NOx-Rohemission-Massenstrom bekannt. Aus diesen Werten kann die im NOx-Speicher 3 eingelagerte NOx-Menge berechnet werden. Ggf. kann auch aus der nach dem Speicherkatalysator 3 gemessenen NOx-Menge unter Berücksichtigung des NOx-Schlupfes (temperatur- bzw. massenstromabhängig) die gespeicherte NOx-Menge ermittelt werden. Die eingespeicherte NOx-Menge im Katalysator 3 stellt somit eine im Zusammenhang mit dem Signal des NOx-Sensors 4 stehende Größe dar.

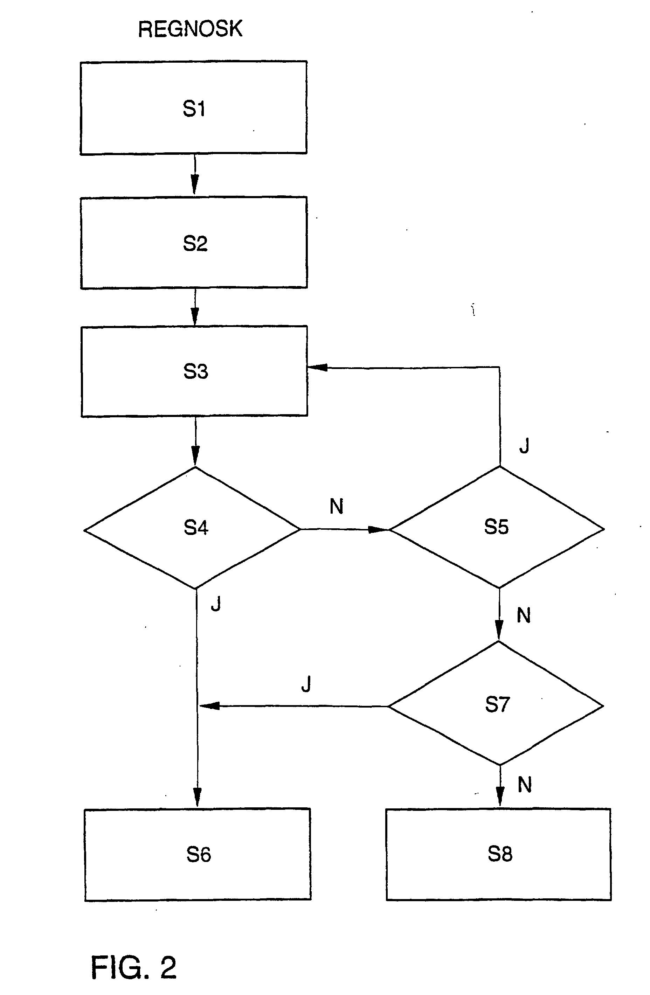

Fig. 2 zeigt den Ablauf der Funktion REGNOSK zur Regelung des NOx-Speicherkatalysators mit dem nach NOx-Speicherkatalysator gemessenen NOx-Signal. Im Schritt S1 wird in den mageren Motorbetrieb umgeschaltet. Daraufhin wird im Schritt S2 und damit dem Beginn der NOx-Einspeicherung am NOx-Speicherkatalysator die Größe MNONK, welche die integrierte NOx-Masse nach NOx-Speicherkatalysator wiedergibt, mit einem Startwert initialisiert. Der Startwert beträgt im allgemeinen Null.

Der Zeitpunkt des NOx-Einspeicherbeginns kann durch Größen im Steuergerät unter Berücksichtigung der Gaslaufzeiten bestimmt werden. Verfügt die NOx-Meßeinrichtung über ein zusätzliches Lambda-Meßsignal und ist dieses im Steuergerät bekannt, so kann dieses alternativ oder in Kombination herangezogen werden.

Für die Dauer des Magerbetriebes wird der NOx-Massenstrom solange im Schritt S3 aufintegriert, bis der zulässige Grenzwert erreicht ist, was im Schritt S4 abgefragt wird. Ist der zulässige Grenzwert noch nicht erreicht, so wird im Schritt S5 der Motorenstatus mager/fett abgefragt. Ist der Motorenstatus weiterhin mager, so wird zum Schritt S3, der Integration, zurückgekehrt. Alternativ kann als zulässige Grenze auch eine gewisse NOx-Konzentration definiert werden. Im Steuergerät wird dann eine Regeneration des NOx-Speicherkatalysators angefordert (Schritt S6). Der zulässige Grenzwert richtet sich dabei hauptsächlich nach den aktuellen Emissionsvorschriften.

Wird aus anderen Gründen (z. B. Beschleunigungsanforderung) vor Erreichen des Grenzwertes in den stöchiometrischen oder fetten Motorbetrieb geschaltet, so ist der Motorenstatus im Schritt S5 "nicht mager". Im Schritt S7 wird daher abgefragt, ob die bereits gespeicherte NOx-Masse eine Regeneration erforderlich macht d.h. ob die bereits eingespeicherte NOx-Masse über einem gewissen Schwellwert liegt. Ist dies nicht der Fall, so wird keine Regeneration (Schritt S8) angefordert. Ist eine Regeneration notwendig, so wird im Schritt S6 eine Speicher-Katalysator-Regeneration angefordert. Dieser Schwellwert ist hauptsächlich beschichtungs- und volumenspezifisch von der Gesamt-Speicherfähigkeit des NOx-Speicherkatalysators abhängig.

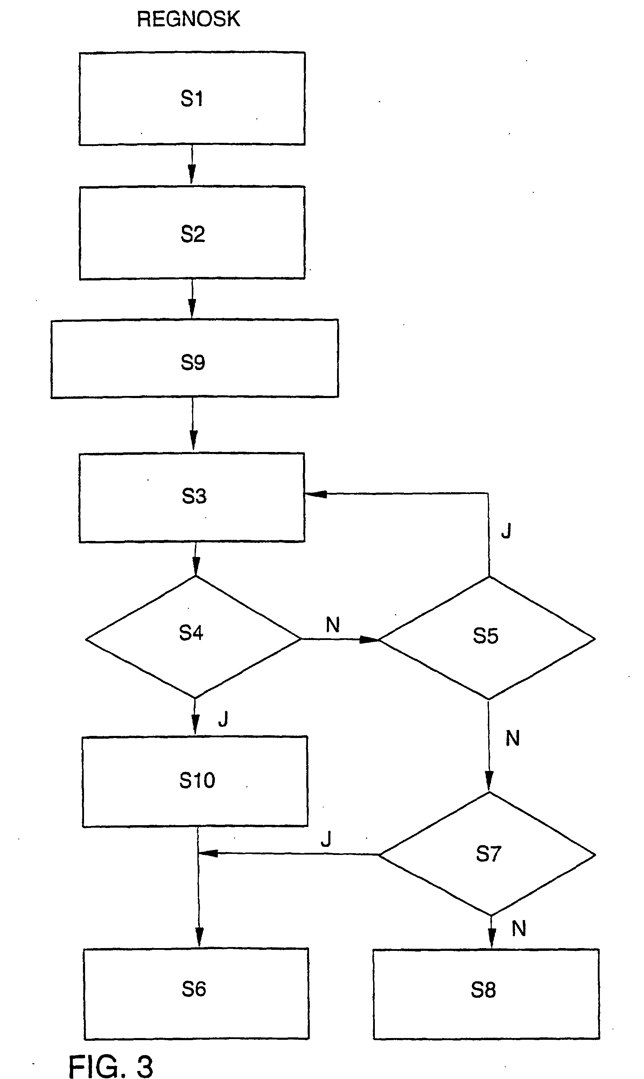

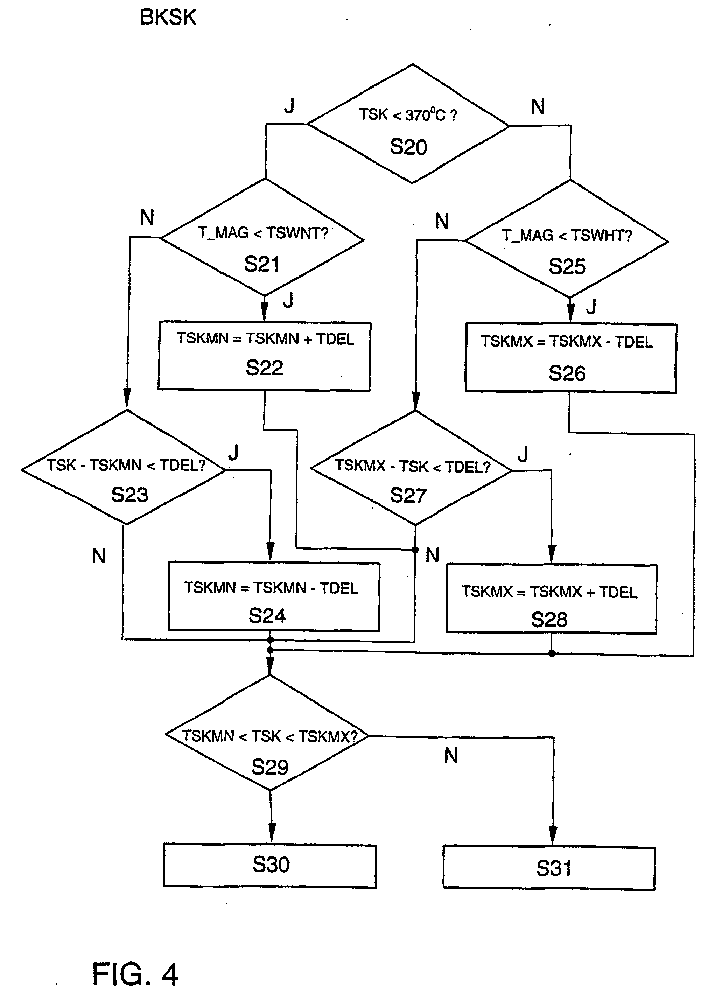

Fig. 3 zeigt eine um die Funktion "Bestimmung der Magerintervalldauer" ergänzte Steuerung, damit die NOx-Speicherfähigkeit des NOx-Speicherkatalysators in verschiedenen Alterungs- und Vergiftungszuständen optimal ausgenutzt werden kann. Hier wird gleichzeitig mit der Initialisierung von MNONK (Schritt S2) beim Umschalten in den Magerbetrieb (Schritt S1) im Schritt S9 die Variable T_MAG für die Magerintervalldauer mit Null initialisiert. Nach Erreichen -des zulässigen NOx-Schwellwertes und der Regenerationsanforderung wird im Schritt S10 die Magerintervalldauer festgehalten und kann zur Auswertung an die Funktion BKSK (Betriebskoordination NOx-Speicherkatalysator), die in der Fig. 4 erläutert werden wird, übergeben werden. Die restlichen Verfahrensschritte der Fig. 3 entsprechen denjenigen der Figur 2.

Die in Figur 4 dargestellte Funktion BKSK ist für die Freigabe des Magerbetriebes in Abhängigkeit von der NOx-Speicherkatalysator-Temperatur verantwortlich. Durch ständiges Abfragen der oberen und unteren Temperaturgrenzen werden insbesondere eventuelle Ungenauigkeiten des Katalysator-Temperaturmodelles ausgeglichen. Es sind definiert: TSK als aktuelle Temperatur des NOx-Speicherkatalysators, TSKMN als minimal zulässige Temperatur des NOx-Speicherkatalysators, TSKMX als maximal zulässige Betriebstemperatur des NOx-Speicherkatalysators und TDEL als applizierbare Hysteresenbreite oder Temperaturintervall (z. B. 10°C), die sinnvollerweise für alle Bedingungen konstant gehalten werden sollte. Ferner bedeutet T_MAG die Dauer des Magerintervalls, TSWNT die minimale niedere Magerintervalldauer, TSWHT die minimale hohe Magerintervalldauer und THR die Schwellentemperatur zur Bestimmung des Nieder- und Hochtemperaturzweigs.

Der Magerbetrieb wird gesperrt werden, wenn TSK < TSKMN oder TSK> TSKMX ist, da mit dem Unterschreiten der minimalen Katalysatortemperatur ein Einspeichern Von NOx in den Katalysator nicht möglich ist, bzw. da mit dem Überschreiten der maximal zulässigen Katalysatortemperatur ein Einspeichern nicht mehr möglich ist.

Beim Initialisieren der Funktion, z. B. bei Austausch des Steuergerätes, werden die Werte TSKMN und TSKMX mit katalysatorspezifischen Ausgangswerten initialisiert.

In der Funktion wird zwischen einem Niedertemperaturzweig, wenn sich die Katalysatortemperatur im Bereich des unteren Grenzwertes bewegt, und einem Hochtemperaturzweig, wenn sich die Katalysatortemperatur im Bereich des oberen Grenzwertes bewegt, unterschieden. Dazu wird die aktuelle Katalysatortemperatur im Vergleich zu einer applizierbaren Temperatur THR (z. B. 370°C) abgefragt (Abfrage S20).

Im Niedertemperaturzweig wird die beispielsweise die von der Funktion REGNOSK bestimmte Magerintervalldauer T_MAG kleiner als die minimal niedere vorgegebene Magerintervalldauer TSWNT (applizierbar), was in der Abfrage S21 geprüft wird, so ist TSKMN offenbar zu niedrig angesetzt, da der Katalysator noch nicht einspeichern kann. Es wird daher TDEL zu TSKMN addiert (Schritt S22). Bewegt sich der NOx-Speicherkatalysator aber im Bereich von maximal TDEL über TSKMN mit noch ausreichender NOx-Einspeicherung, d. h. TSK-TSKMN<TDEL (Abfrage S23) so wird ermöglicht, eine Konvertierung auch bei noch niedrigeren Temperaturen vorzunehmen indem im Schritt S24 von TSKMN der Temperaturbetrag TDEL abgezogen wird.

Im Hochtemperaturzweig (Schritt S20) wird wie folgt vorgegangen: Ist die von REGNOSK übergebene Magerintervalldauer T_MAG kleiner als die minimal hohe vorgegebene Magerintervalldauer TSWHT (Abfrage S25), so ist die maximale Katalysatortemperatur TSKMX offenbar zu hoch angesetzt, der Katalysator kann nicht mehr einspeichern. Es wird im Schritt S26 daher TSKMX um TDEL vermindert. Bewegt sich der NOx-Speicherkatalysator aber im Bereich von höchstens TDEL unter TSKMX mit noch ausreichender NOx-Einspeicherung (Abfrage S27), so wird ermöglicht, eine Konvertierung auch bei noch höheren Temperaturen vorzunehmen, indem TDEL zu TSKMX addiert wird (Schritt S28).

Der Hochtemperatur- und Niedertemperaturzweig werden in der Abfrage S29, die überprüft, ob die Bedingung TSKMN<TSK<TSKMX gilt, zusammengeführt. Ist die Bedingung S29 erfüllt, so wird im Schritt S30 der Magerbetrieb freigegeben. Ist die Bedingung S29 nicht erfüllt, so wird der Magerbetrieb im Schritt S31 gesperrt.

Der oben erläuterte Algorithmus zur Änderung der maximal und minimal zulässigen Katalysatortemperatur in Abhängigkeit von der bestimmten Magerintervalldauer T_MAG führt zu den gleichen Ergebnissen, wenn anstelle der Magerintervalldauer die Regenerationsintervalldauer mittels beispielsweise einer λ-Sonde bestimmt und im Algorithmus eingesetzt wird. Anstelle der Parameter niedere minimale und hohe minimale Magerintervalldauer müssen dann entsprechende niedere minimale und hohe minimale Regenerationsintervalldauern verwendet werden. Ferner können die niederen und hohen minimalen Mager- bzw. Regenerationsintervalldauern für den Nieder- und Hochtemperaturzweig gleich sein.

Wird anstelle eines Einzonen-Temperaturmodelles des NOx-Speicherkatalysators ein Mehrzonen-Temperaturmodell verwendet, so kann der Magerbetrieb freigegeben werden, wenn ein applizierbarer Bereich des Katalysators (z. B. 50%) wärmer ist als TSKMN bzw. kälter ist als TSKMX. Das heißt, daß für den Niedertemperaturzweig der jeweils wärmere Teil des Katalysators zur Beurteilung herangezogen wird und für den Hochtemperaturzweig der jeweils kältere Teil des Katalysators.

### BEZUGSZEICHENLISTE

- 1: Motor
- 2: Vorkatalysator
- 3: NOx-Absorber-Katalysator
- 4: NOx-Sensor und/oder λ-Sonde
- 5: Motorsteuergerät
- S1: Wechsel in den Magerbetrieb
- S2: Initialisierung von MNONK
- S3: Integration NOx-Massenstrom nach Katalysator
- S4: Grenzwert erreicht?
- S5: Status "mager"?
- S6: Regeneration anfordern
- S7: Gespeicherte NOx-Nasse erfordert Regeneration? (d.h. Schwellwert erreicht?)
- S8: Keine Regeneration anfordern
- S9: Initialisierung von T_MAG und Aktivierung Zeitzähler
- S10: Bestimmung Magerintervalldauer T_MAG
- S20: TSK < THR
- S21: T_MAG < TSWNT
- S22: TSKMN = TSKMN + TDEL
- S23: TSK - TSKMN < TDEL
- S24: TSKMN = TSKMN - TDEL
- S25: T_MAG < TSWHT
- S26: TSKMX = TSKMX - TDEL
- S27: TSKMX - TSK < TDEL
- S28: TSKMX = TSKMX + TDEL
- S29: TSKMN < TSK < TSKMX
- S30: Magerbetrieb freigeben
- S31: Magerbetrieb sperren
- J: Ja
- N: Nein
- TSK: Temperatur des Speicherkatalysators
- TSKMN: Minimale zulässige Katalysatortemperatur
- TSKMX: Maximale zulässige Katalysatortemperatur
- TDEL: Temperaturintervall
- T_MAG: Dauer des Mager- oder Regenerationsintervalls
- THR: Schwellentemperatur
- TSWNT: Minimal zulässige Mager- oder Regenerationsintervalldauer im Niedertemperaturzweig
- TSWHT: Minimale zulässige Mager- oder Regenerationsintervalldauer im Hochtemperaturzweig

## Patentansprüche

1. Verfahren zur Regelung eines NOx-Absorber-Katalysators (3) einer Brennkraftmaschine (1) mit einer in Abgasströmungsrichtung hinter dem Katalysator angeordneten NOx-empfindlichen Meßeinrichtung (4) und einer Steuereinheit (5), wobei die NOx-empfindliche Meßvorrichtung (4) die NOx-Konzentration des Abgases bestimmt, die während des Magerbetriebs in den Katalysator eingespeicherte NOx-Menge durch Integration mittels des NOx-Konzentrationssignals bestimmt wird, und der Magerbetrieb der Brennkraftmaschine (1) mit dem Erreichen eines vorgegebenen Grenzwerts der eingespeicherten NOx-Menge beendet wird, **dadurch gekennzeichnet, daß** eine Regeneration des Katalysators (3) angefordert wird, wenn ein vorbestimmter Schwellwert der eingespeicherten NOx-Menge überschritten ist und der Magerbetrieb der Brennkraftmaschine (1) vor Erreichen des Grenzwerts beendet ist.

2. Verfahren nach Anspruch 1, **dadurch gekennzeichnet, daß** mit dem Beginn einer Magerperiode die eingespeicherte NOx-Menge auf einen vorbestimmten Startwert (MNONK) gesetzt wird.

3. Verfahren nach Anspruch 2, **dadurch gekennzeichnet, daß** der vorbestimmte Startwert (MNONK) auf Null gesetzt wird.

4. Verfahren nach einem der vorangegangenen Ansprüche, **dadurch gekennzeichnet, daß** mit dem Erreichen des Grenzwerts eine Regeneration des Katalysators (3) angefordert wird.

5. Verfahren nach einem der vorangegangenen Ansprüche, **dadurch gekennzeichnet, daß** die Dauer eines Magerintervalls (T_MAG) bestimmt wird.

6. Verfahren nach einem der Ansprüche 1 bis 4, **dadurch gekennzeichnet, daß** die Dauer eines Regenerationsintervalls bestimmt wird.

7. Verfahren nach Anspruch 5 oder 6, **dadurch gekennzeichnet, daß** der Magerbetrieb in Abhängigkeit von der Katalysatortemperatur (TSK) freigegeben wird.

8. Verfahren nach Anspruch 7, **dadurch gekennzeichnet, daß** der Magerbetrieb gesperrt wird, wenn die Katalysatortemperatur (TSK) kleiner als eine vorbestimmte minimale Katalysatortemperatur (TSKMN) oder größer als eine vorgegebene maximale Katalysatortemperatur (TSKMX) ist.

9. Verfahren nach Anspruch 8, **dadurch gekennzeichnet, daß** die minimale Katalysatortemperatur (TSKMN) um ein vorgegebenes Temperaturintervall (TDEL) erhöht wird, wenn die Katalysatortemperatur (TSK) unter einer vorbestimmten Schwelltemperatur (THR) liegt und die Mager- oder Regenerationsintervalldauer (T_MAG) kleiner als eine vorgegebene minimale niedere Mager- oder Regenerationsintervalldauer (TSWNT) ist, bzw. die maximale Katalysatortemperatur (TSKMX) um das vorgegebene Temperaturintervall (TDEL) erniedrigt wird, wenn die Katalysatortemperatur (TSK) oberhalb der vorbestimmten Schwelle (THR) liegt und die Mager- oder Regenerationsintervalldauer (T_MAG) kleiner als eine vorgegebene minimale hohe Mager- oder Regenerationsintervalldauer (TSWHT) ist.

10. Verfahren nach Anspruch 9, **dadurch gekennzeichnet, daß** die minimale Katalysatortemperatur (TSKMN) um das vorgegebene Temperaturintervall (TDEL) erniedrigt wird, wenn die Katalysatortemperatur (TSK) unter einer vorbestimmten Schwelltemperatur (THR) liegt, die Differenz aus Katalysatortemperatur und minimaler Katalysatortemperatur kleiner als das Temperaturintervall (TDEL) und die Mager- oder Regenerationsintervalldauer (T_MAG) länger als die niedere minimale Mager- oder Regenerationsintervalldauer (TSWNT) ist, bzw. die maximale Katalysatortemperatur (TSKMX) um das vorgegebene Temperaturintervall (TDEL) erhöht wird, wenn die Katalysatortemperatur (TSK) oberhalb der vorbestimmten Schwelle (THR) liegt, die Differenz aus maximaler Katalysatortemperatur (TSKMX) und Katalysatortemperatur (TSK) kleiner als das Temperaturintervall (TDEL) und die Mager- oder Regenerationsintervalldauer (T_MAG) länger als die hohe minimale Mager- oder Regenerationsintervalldauer (TSWHT),ist.

## Claims

1. Method for regulating an NOx absorber catalytic converter (3) of an internal combustion engine (1) having an NOx-sensitive measuring device (4), which is arranged downstream of the catalytic converter as seen in the direction of flow of the exhaust gas, and a control unit (5), the NOx-sensitive measuring apparatus (4) determining the NOx concentration of the exhaust gas, the quantity of NOx which has been stored in the catalytic converter during lean-burn operation being determined in integration by means of the NOx concentration signal, and lean-burn operation of the internal combustion engine (1) being terminated when a predetermined limit value for the stored quantity of NOx is reached, **characterized in that** it is necessary to regenerate the catalytic converter (3) when a predetermined threshold value for the stored quantity of NOx has been exceeded and lean-burn operation of the internal combustion engine (1) has been terminated before the limit value is reached.

2. Method according to Claim 1, **characterized in that** when a lean-burn period starts, the stored quantity of NOx is set to a predetermined starting value (MNONK).

3. Method according to Claim 2, **characterized in that** the predetermined starting value (MNONK) is set to zero.

4. Method according to one of the preceding claims, **characterized in that** regeneration of the catalytic converter (3) is required when a limit value is reached.

5. Method according to one of the preceding claims, **characterized in that** the duration of a lean-burn interval (T_MAG) is determined.

6. Method according to one of Claims 1 to 4, **characterized in that** the duration of a regeneration interval is determined.

7. Method according to Claim 5 or 6, **characterized in that** lean-burn operation is enabled as a function of the catalytic converter temperature (TSK).

8. Method according to Claim 7, **characterized in that** lean-burn operation is blocked if the catalytic converter temperature (TSK) is lower than a predetermined minimum catalytic converter temperature (TSKMN) or is greater than a predetermined maximum catalytic converter temperature (TSKMX).

9. Method according to Claim 8, **characterized in that** the minimum catalytic converter temperature (TSKMN) is increased by a predetermined temperature interval (TDEL) if the catalytic converter temperature (TSK) is below a predetermined threshold temperature (THR) and the lean-burn or regeneration interval duration (T_MAG) is shorter than a predetermined minimum low lean-burn or regeneration interval duration (TSWNT), or the maximum catalytic converter temperature (TSKMX) is reduced by the predetermined temperature interval (TDEL) if the catalytic converter temperature (TSK) is above the predetermined threshold (THR) and the lean-burn or regeneration interval duration (T_MAG) is shorter than a predetermined minimum high lean-burn or regeneration interval duration (TSWHT).

10. Method according to Claim 9, **characterized in that** the minimum catalytic converter temperature (TSKMN) is reduced by the predetermined temperature interval (TDEL) if the catalytic converter temperature (TSK) is below a predetermined threshold temperature (THR), the difference between catalytic converter temperature and minimum catalytic converter temperature is lower than the temperature interval (TDEL) and the lean-burn or regeneration interval duration (T_MAG) is longer than the low minimum lean-burn or regeneration interval duration (TSWNT), or the maximum catalytic converter temperature (TSKMX) is increased by the predetermined temperature interval (TDEL) if the catalytic converter temperature (TSK) is above the predetermined threshold (THR), the difference between maximum catalytic converter temperature (TSKMX) and catalytic converter temperature (TSK) is lower than the temperature interval (TDEL) and the lean-burn or regeneration interval duration (T_MAG) is longer than the high minimum lean-burn or regeneration interval duration (TSWHT).

## Revendications

1. Procédé pour la régulation d'un catalyseur absorbeur de NOx (3) d'un moteur à combustion interne (1) avec un dispositif de mesure sensible au NOx (4) disposé après le catalyseur dans le sens d'écoulement des gaz d'échappement et d'une unité commande (5), le dispositif de mesure sensible au NOx (4) déterminant la concentration en NOx des gaz d'échappement, la quantité de NOx accumulée dans le catalyseur pendant le fonctionnement à mélange pauvre étant déterminée par intégration à l'aide d'un signal de la concentration en NOx et le fonctionnement à mélange pauvre du moteur à combustion interne (1) étant terminé quand une valeur limite prédéterminée de la quantité de NOx accumulée est atteinte, **caractérisé en ce qu'**une régénération du catalyseur (3) est demandée quand une valeur seuil prédéterminée de la quantité de NOx accumulée est dépassée et que le fonctionnement à mélange pauvre du moteur à combustion interne (1) est terminé avant d'atteindre la valeur limite.

2. Procédé selon la revendication 1, **caractérisé en ce que** la quantité de NOx accumulée est fixée à une valeur de départ prédéterminée (MNONK), au début d'une période à mélange pauvre.

3. Procédé selon la revendication 2, **caractérisé en ce que** la valeur de départ prédéterminée (MNONK) est fixée à zéro.

4. Procédé selon l'une quelconque des revendications précédentes, **caractérisé en ce qu'**une régénération du catalyseur (3) est demandée quand la valeur limite est atteinte.

5. Procédé selon l'une quelconque des revendications précédentes, **caractérisé en ce que** la durée d'un intervalle en mélange pauvre (T_MAG) est déterminée.

6. Procédé selon l'une des revendications 1 à 4, **caractérisé en ce que** la durée d'un intervalle de régénération est déterminée.

7. Procédé selon la revendication 5 ou 6, **caractérisé en ce que** le fonctionnement à mélange pauvre est autorisé en fonction de la température du catalyseur (TSK).

8. Procédé selon la revendication 7, **caractérisé en ce que** le fonctionnement à mélange pauvre est bloqué quand la température du catalyseur (TSK) est inférieure à une température du catalyseur minimale prédéterminée (TSKMN) ou supérieure à une température du catalyseur maximale prédéterminée (TSKMX).

9. Procédé selon la revendication 8, **caractérisé en ce que** la température de catalyseur minimale (TSKMN) est augmentée d'un intervalle de température prédéterminé (TDEL) quand la température de catalyseur (TSK) se situe sous une température seuil prédéterminée (THR) et la durée d'intervalle de régénération ou de mélange pauvre (T_MAG) est inférieure à une durée d'intervalle de régénération ou de mélange pauvre minimale prédéterminée à basse température(TSWNT) ou selon le cas **en ce que** la température de catalyseur maximale (TSKMX) est abaissée de l'intervalle de température prédéterminé (TDEL) quand la température de catalyseur (TSK) se situe au-dessus du seuil prédéterminé (THR) et la durée d'intervalle de régénération ou de mélange pauvre (T_MAG) est inférieure à une durée d'intervalle de régénération ou de mélange pauvre minimale prédéterminée à haute température (TSWHT).

10. Procédé selon la revendication 9, **caractérisé en ce que** la température de catalyseur minimale (TSKMN) est abaissée d'un intervalle de température prédéterminé (TDEL) quand la température de catalyseur (TSK) se situe sous une température seuil prédéterminée (THR), la différence entre la température de catalyseur et la température de catalyseur minimale est inférieure à l'intervalle de température (TDEL) et la durée d'intervalle de régénération ou de mélange pauvre (T_MAG) est plus longue que la durée d'intervalle de régénération ou de mélange pauvre minimale à basse température (TSWNT) ou selon le cas **en ce que** la température de catalyseur maximale (TSKMX) est augmentée de l'intervalle de température prédéterminé (TDEL) quand la température de catalyseur (TSK) se situe au-dessus du seuil prédéterminé (THR), la différence entre la température du catalyseur maximale (TSKMX) et la température du catalyseur (TSK) est inférieure à l'intervalle de température (TDEL) et la durée d'intervalle de régénération ou de mélange pauvre (T_MAG) est plus longue que la durée d'intervalle de régénération ou de mélange pauvre minimale à haute température (TSWHT).
